# EUROPEAN PATENT SPECIFICATION

(11) **EP 4 515 418 B1**
(45) Date of publication and mention of the grant of the patent: **28.10.2026**
(21) Application number: 22944276.9
(22) Date of filing: 01.06.2022
(51) Int. Cl.: G06F 16/2457, G06F 16/28, G06F 9/38, G06F 16/2453

(54) **SYSTEM AND METHOD OF DATA MANAGEMENT**
SYSTEM UND VERFAHREN ZUR DATENVERWALTUNG
SYSTÈME ET PROCÉDÉ DE GESTION DE DONNÉES

(43) Date of publication of application: 05.03.2025
(73) Proprietor: Huawei Technologies Co., Ltd., Shenzhen, Guangdong 518129 (CN)
(72) Inventor: YING, Bidi, Ottawa, 231 (CA); LI, Xu, Ottawa, 231 (CA); YANG, Chenchen, Ottawa, 231 (CA); SHI, Weisen, Ottawa, 231 (CA)
(74) Representative: Goddar, Heinz J.
(86) International application number: PCT/CN2022/096507
(87) International publication number: WO 2023/230943

(56) References cited:
- WO-A1-2022/094888
- CN-A- 111 857 991
- CN-A- 112 182 107
- CN-A- 113 392 134
- CN-A- 114 372 097
- US-A1- 2009 077 078
- US-A1- 2011 087 681
- US-A1- 2011 087 681
- US-A1- 2017 168 827
- US-B1- 10 460 130

## Description

### TECHNICAL FIELD

The present disclosure pertains to data management.

### BACKGROUND

Federated learning is a machine learning technique which trains an algorithm across multiple devices or servers that hold local data samples, without exchanging those data samples. Vertical federated learning is an example where two data sets share the same data object space but differ in feature space. In vertical federated learning (vFL), a data object can have multiple different attributes. Further, different parties may only be able to access and control a subset of the attributes associated with the same data object.

A stage in vFL is identifying the same data objects shared by all parties, which may be termed an "intersection". In standard vFL, this is achieved by Private Set Intersection (PSI) protocols where different parties exchange encrypted their own information to compute the intersection. The data objects utilize certain universally identifiable information that can be used to identify data objects across organizations. The common approach is through the use of some identifiable information (e.g., phone number and email address). After all parties obtain the identifiable information of the intersection, they can jointly train a model on the intersection. However, in a communication network, a data object may have different identifiers in different party databases. So, if all parties exchange encrypted their own information using PSI, the parties will not be able to find any intersection.

Accordingly, there is a need for techniques for alignment of private identifiable information that are not subject to one or more limitations of the prior art.

This background information is provided to a challenge that how to identify information from different parties by enabling the information associated with same data objects. Data items associated with the information from the different parities, should be jointly trained by vFL.

US 2011/087681 A1 discloses: A digital processing system provided according to an aspect of the disclosure processes items received from different data sources, specifically when a second set of items received from a second data source is related to corresponding ones of a first set of items received from a first data source. In one embodiment, each of the items in the first set and the second set is first assigned a corresponding digital value and then sorted according to a sort order of the assigned digital values to form a sorted output. The digital values are assigned such that items in the second set are grouped with related corresponding ones of the first set of items. Thus, items from different sources are merged (and sorted) based on the relation between the items.

US 2009/077078 A1 discloses systems and methods for efficiently merging multiple sorted data sets to reduce processor load and improve query performance in large-scale data mining operations. The approach involves sorting key column records within each data set, assembling subsets of these records into a working data structure with indicators for duplicates, positions, and last records, and performing optimized in-memory sorting. By leveraging compact data structures and cache-aware processing, this method enables faster merging and transformation of event data across distributed databases while minimizing input/output operations and computational overhead.

### SUMMARY

The object of the invention is solved by the features of the independent claims. Further embodiments are the subject-matter of the dependent claims. An object of embodiments of the present disclosure is to provide a system and a method for data management. In accordance with embodiments of the present disclosure, a system includes a first sorting function, a second sorting function and a joining function.

The first sorting function is configured to receive a first sorting instruction for sorting a first data set from a first source, wherein the first sorting instruction indicates data objects in an order, and the first data set includes first data items at least one of which is related to a data object among the data objects. The first sorting function is further configured to sort the first data set by grouping, from the first data items, all the data items corresponding to a same data object into a same group to obtain one or more first groups and ordering the one or more first groups according to the order of the data objects indicated by the first sorting instruction to obtain a first sorted data set, wherein the first sorted data set is used for a generation of a first processed data set.

The second sorting function is configured to receive a second sorting instruction for sorting a second data set from a second source, wherein the second sorting instruction indicates the data objects in the order, and the second data set includes data items at least one of which is related to the data object among the data objects. The second sorting function is further configured to sort the second data set by grouping, from the second data items, all the data items corresponding to a same data object into a same group to obtain one or more second groups and ordering the one or more second groups according to the order of the data objects indicated by the second sorting instruction; wherein the second sorted data set is used for a generation of a second processed data set.

The joining function is configured to obtain the first processed data set and the second processed data set, join the first processed data set and the second processed data set to obtain a single joined data set, and transmit the single joined data set to a data consumer.

A technical advantage may be that the system in embodiments of the present disclosure provides a technique realizing alignment of data items from different data sets by identifying these data items related to same data objects. Sorting functions can identify data items related to a same data object but cannot identify a particular data object, so that privacy of data object can be protected.

In some embodiments, the joining function performing the joining step based on a rule, which is also named as a join rule. In the method, the joining function receives a rule indicating to join groups that are related to the same data object and also that each data object relates to one or more identifiers. At least one of the one or more identifiers corresponds to the first processed data set and at least the other one of the one or more identifiers corresponds to the second processed data set. Optionally, the rule further includes one or more indications indicating a mapping between the at least one of the one or more identifiers and the first processed data set and a mapping between the at least the other one of the one or more identifiers and the second processed data set.

A technical advantage may be that the joining function, according to the rule, produces a single joined set of anonymous joined data items which can be used by applications, for example for vFL. The joined set of anonymous joined data items is associated with a particular data object while the joined set of anonymous joined data items does not identify the particular data object. The rule indicates how the joining function is expected to produce the joined set of anonymous joined data items so as to support applications in a scenario where a data object has different identifiers in different data sets.

In some embodiments, the rule further indicates a first type of concatenation, wherein the joining step is performed based on to the indication so that each processed data item in the first processed group is concatenated with one processed data item in the second processed group. In some embodiments, indicates a second type of concatenation, wherein the joining step is performed based on to the indication so that each processed data item in the first processed group is concatenated with multiple processed data items in the second processed group.

A technical advantage may be that when different data items are associated to a same data object in a scenario including groups in different sizes, different rules enable different data items from different groups to be concatenated. Therefore, different numbers of data items associated with a particular data object can be concatenated flexibly and correctly to support applications for vFL.

Embodiments have been described above in conjunctions with aspects of the present disclosure upon which they can be implemented. Those skilled in the art will appreciate that embodiments may be implemented in conjunction with the aspect with which they are described, but may also be implemented with other embodiments of that aspect. When embodiments are mutually exclusive, or are otherwise incompatible with each other, it will be apparent to those skilled in the art. Some embodiments may be described in relation to one aspect, but may also be applicable to other aspects, as will be apparent to those of skill in the art.

### BRIEF DESCRIPTION OF THE DRAWINGS

Further features and advantages of the present disclosure will become apparent from the following detailed description, taken in combination with the appended drawings, in which:
Figure 1 depicts two data sets according to embodiments of the present disclosure.
Figure 2 depicts an example vFL system related to embodiments of the present disclosure.
Figure 3 depicts a data management system according to embodiments of the present disclosure.
Figure 4 depicts a procedure of managing data items according to embodiments of the present disclosure.
Figure 5 depicts a block diagram of an example electronic device used for implementing methods disclosed herein, according to embodiments of the present disclosure.
Figure 6 depicts a method for data management according to embodiments of the present disclosure

It will be noted that throughout the appended drawings, like features are identified by like reference numerals.

### DETAILED DESCRIPTION

Embodiments of the present disclosure describe methods and systems for data management which align data items from different data sources through identifying these data items related to same data objects, in order to support vertical federated learning (vFL). However, it should be recognized that vFL is just an example, i.e. one possible use case. The described methods and systems can be used to support other use cases.

Embodiments of the present disclosure provide a system that could facilitate data management in communication networks. Further, a method for alignment for data items from different data sources in a communication network is provided, according to embodiments. The method provides solutions of alignment for these data items related to a same data object.

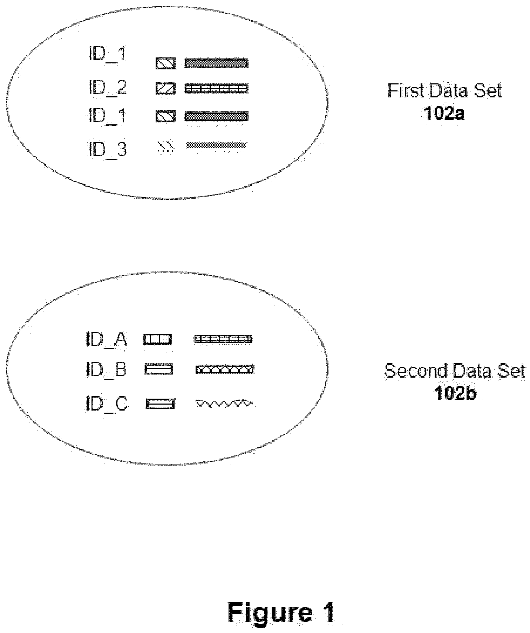

One issue to address is a fact that a data object may have different identifiers (IDs) in different data sets. Figure 1 illustrates two different data sets **102a** and **102b,** which may be stored and controlled separately at different data sources. Data sources could be provided by or correspond to different data providers. At least one first data item in a first data set **102a** is related to a data object. For example, the first data item includes a first identifier (e.g. ID_1) of the data object. Similarly, at least one second data item in a second data set **102b** is related to the data object. For example, the second data item includes a second identifier (e.g. ID_A) of the data object. The first identifier and the second identifier are different. In these data sets **102a** and **102b,** ID_1 and ID_B are identifiers which map to a same data object, while ID_2 and ID_A are identifiers which map to another same data object. ID_3 and ID_C do not map to a same data object. As shown in Figure 1, a data object may have different identifiers (for example, ID_1 and ID_B) related to data items in different data sets. As but one example, an identifier could be an entity (e.g. a network ID)'s name or ID, which may be different in scenarios or applications, a temporary name or ID in one setting (thus in one data source corresponding to the one setting), a different temporary name or ID in another setting (the in another data source corresponding to the another setting). These names or IDs in different data sources may be different.

However, that fact that two identifiers map to the same data object may be desired to be kept secret for two parties (e.g. the two data sources respectively storing and controlling the first data set 102a and the second data set **102b,** or data providers corresponding to them) due to privacy issues. When two identifiers map to the same data object, they are considered equivalent event if they are different. In current systems, such as a Privacy Set Intersection (PSI )system, where different parties exchange encrypted information of data sets to identify the intersection (i.e. data items from different data sets and including identical or equivalent identifiers), there would be no intersection of the first data set **102a** and the second data set **102b.** Therefore, embodiments provide methods and systems for finding the intersection of these data sets, in order to determine which data items are related to the same data object (i.e. which data items including identical or equivalent identifiers).

In one example, two different companies such as a bank and an ecommerce company locate in a city. Each company can be considered as a provider of a data resource. A first data set **102a** from a first data source provided by the bank, and a second data set **102b** from a data source provided by the ecommerce company, are likely to contain information related to most of the residents of the area; thus, the intersection of their user spaces (i.e. set of common users (or residents) using services or products provided by both companies) is large. Members in the user spaces may be expressed as identifiers. However, due to their different business models, the feature spaces (e.g. the services or the products used by the residents, may be expressed as data item) of the two companies are very different. For example, the first data set **102a** (corresponding to the bank) includes information (i.e. feature) about, e.g. a user's revenue, expenditure behavior and credit rating, while the second data set **102b** corresponding to the e-commerce company) includes information (i.e. feature) about, e.g. the user's browsing and purchasing history. Hence, the contents (i.e. feature spaces) of the first data set **102a** and the second data set **102b** are different.

Suppose that it is desired that both parties each have a prediction AI model for product purchases based on their user spaces and feature spaces Vertically federated learning (vFL) system is an example of a process of aggregating these different features from feature spaces, to build a model with data items from both parties collaboratively, whereas the user identifiers related to data items from both parties are assumed to be mapped to the same data objects.

In other words, in such a vFL system, during each training cycle, data items from two or more parties needs to be aligned. Data alignment is the aligning of data items according to application requirements. For example, data items related to the same data object need to be identified, so as these data items can be used to train the AI model correctly.

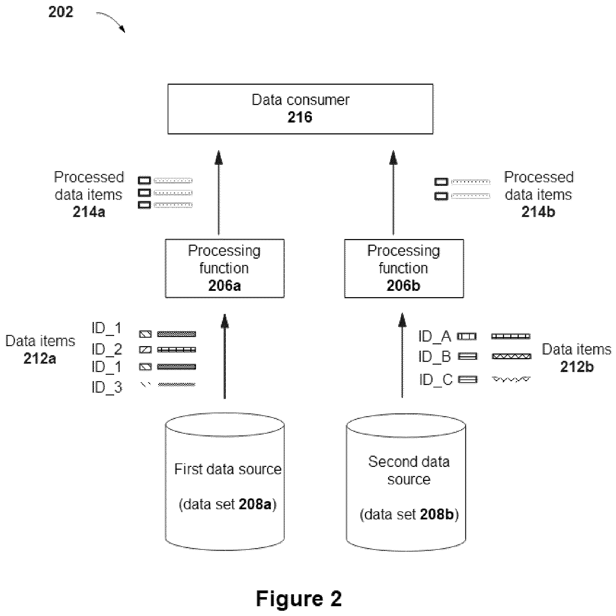

Figure 2 shows an example of a vFL system **202,** when the data consumer **216** (which may be a network entity, or device) requests for data (which is to be used for applications (e.g., an AI training service)), each of data items **212a** and each of data items **212b** respectively from a data set **208a** provided by a first data source and a data set **208b** provided by a second data source, should be identified to be related to a same data object, so that both of them are aligned before being respectively sent to processing functions **206a** and **206b.** These processing functions process the data items to obtain processed data items **214a** and **214b,** which respectively correspond to the data items **212a** and **212b.** Processed data items **214a** and **214b** are then sent as the output of processing functions **206a** and **206b** to the data consumer **216.** The data consumer **216** could be another network entity that further processes the processed data items **214a** and **214b** jointly, e.g. using them as an input to perform certain computation that may be related to training an AI model.

It is noted that data items in different data sets that correspond to one another may not be transmitted synchronized (if, for example, the data set were to be considered a list of data items). For example, a first data item including ID_1 in the first data set, a second data item including ID_2 in the first data set, a third data item including ID_1 in the first data set, are transmitted to in an order of the first data item including ID_1, the second data item including ID_2 and the third data item including ID_1; a forth data item including ID_A in the second data set and a fifth data item including ID_B in the second data set, are transmitted to in an order of the forth data item including ID_A and the fifth data item including ID_B. Since the first data item including ID_1 and the forth data item including ID_A are not related to the same data object, the corresponding processed data items are not correlated. But these un-correlated processed data items are provided to the data consumer **216,** and used by the data consumer **216** to perform the computation, causing error in the application layer (e.g. training error in the AI model training). Further there may be multiple identifiers associated with the same data object within one or more of the data sets, and the numbers of identifiers associated with a single data object may differ among the data sets. In other words, the data sets may have N:M data items related to the same data object. N:M data items is used to indicate that, for example, a first data set has N data items related to a particular same data object and a second data set has M data items that are related to the particular same data object (i.e., two data items in the first data set may include ID_1, while one data item in the second data set includes ID_B, and both ID_1 and ID_B map to the same data object, thus, N:M is 2:1).

Therefore, one challenge may be how to transmit data items from different data sets to enable different processing functions to respectively process these corresponding data items related to same data objects in each processing cycle. To be simple, we call this as data items transmitted in an order for further process, to obtain processed data items.

Moreover, after receiving processed data items from processing functions, the number of processed data items from different processing functions may not be the same. For example, the number of processed data items from one processing function is N, while the number of processed data items from another processing function is M. Thus, there has be N:M data items wherein N not equal to M. Another challenge is thus how to enable processed data items to be related to a same data objective for further process (e.g., jointly training).

Embodiments of the present disclosure therefore provide a data management system which aligns data items from different data sources through identifying these data items related to same data objects, to support systems in which these data items may have different identifiers in different database.

Embodiments of the present disclosure may be used in Internet of Things (IoT) and Internet of Vehicles (IoV) scenarios, or it may be applied to applications such as satellite communications and Internet of Vehicles (IoV). In such scenarios, the destination identifier in the data packet may be referred to identifier of UE, or identifier of terminal device (e.g., Internet of Things (IoT) devices, wearable devices, and vehicular devices (or vehicle-mounted devices, vehicle on-board equipment)).

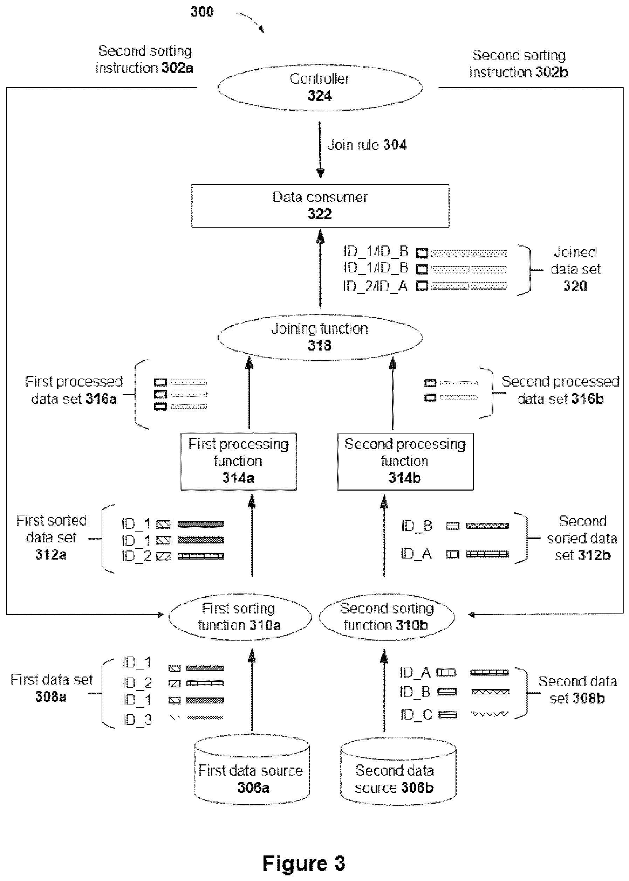

As shown in Figure 3, a system **300** is a data management system. The system provides a technique for alignment of data items from different data sets by identifying these data items related to same data objects.

In some embodiments, a first set of identifiers (IDs) associated with data items in a first data set **308a** from a first data source **306a** and a second set of identifiers associated with data items in the second data set **308b** from a second data source **306b,** are identified or mapped to a same data object. Identifiers in the first set may be different with the identifiers in the second set. For example, ID_1 and ID_B can be mapped a same data object, and ID_2 and ID_A can be mapped to another data object, but ID_3 is not mapped to any data object whose data items are in the second data set **308b,** and ID_C is not mapped to any data object whose data items in the first data set **308a.**

In some embodiments, a first sorting instruction **302a** is generated by a controller **324** and is sent to a first sorting function **310a.** A second sorting instruction **302b** is generated by a controller **324** and is sent to a second sorting function **310b.**

In some embodiments, the controller **324** may request for ID mapping from a mapping function, to obtain a first order set for the first identifiers related to data items from the first data set and a second order set for the second identifiers related to data items from the second data set. If a particular first identifiers and a particular second identifiers are mapped to a same data object, the value of a first element corresponding to the particular first identifiers is the same with the value of a second element corresponding to the particular second identifiers, where the first element is from the first order set and the second element is from the second order set. The controller **324** generates a first sorting instruction according to the first order set, and a second sorting instruction according to the second order set.

In some embodiments, the first sorting instruction **302a** indicates data objects in an order by including a first set of identifiers of the data objects based on the first order set, and has an indication. The second sorting instruction **302b** indicates data objects in an order by including a second set of identifiers of the data objects based on the second order set, and has the indication. The indication may indicate: (1) at least one of the first set of identifiers and at least one of the second set of identifiers mapped to one same data object, (2) at least another of the first set of identifiers and at least another of the second set of identifiers mapped to another same data object.

In some embodiments, the first sorting instruction **302a** further includes information identifying the first data set **308a** and the first sorted data set **312a,** for example, the identifier for the first data set **308a** and an identifier for the first sorted data set **312a.** The first sorting instruction **302a** may further include a first identifier indication which indicates an identifier of a first processed data set **316a** to be associated with the identifier of the first sorted data set **312a.** The second sorting instruction **302b** includes information identifying the second data set **308b** and the second sorted data set **312b,** for example, the identifier for the second data set **308b,** and an identifier for the second sorted data set **312b.** The second sorting instruction **302b** further includes a second identifier indication that indicates an identifier of a second processed data set **316b** to be associated with the identifier of the second sorted data set **312b.**

In some embodiments, the first sorting instruction **302a** further includes information identifying the first data set **308a,** for example, an identifier for the first data set **308a.** The second sorting instruction further includes information identifying the second data set **308b,** for example, an identifier for the second data set **308b.**

In some embodiments, if the first sorting instruction **302a** includes information identifying the first data set **308a** and the first sorted data set **312a** and the second sorting instruction **302b** includes information identifying the second data set **308b** and the second sorted data set **312b,** the controller **324** generates a join rule 304 based on the information and sends the join rule **304** to a joining function **318.** The information identifying the first sorted data set is the same as or associated with a data set identifier indicating the first processed data set, and the information identifying the second sorted data set is the same as or associated with a data set identifier indicating the second processed data set.

In some embodiments, if the first sorting instruction **302a** includes information identifying the first data set **308a** and the second sorting instruction **302a** includes information identifying the second data set **308b,** the controller **324** generates a join rule **304** based on information identifying the first sorted data set from the first sorting function and information identifying the second sorted data set from the second sorting function. The information identifying the first data set is the same as or associated with a data set identifier indicating the first processed data set, and the information identifying the second data set is the same as or associated with a data set identifier indicating the second processed data set. The controller **324** sends the join rule **304** to a joining function **318.**

In some embodiments, the join rule includes a first data set identifier indicating the first processed data set **316a** and a second data set identifier indicating the second processed data set **316b.** The join rule further has an indication that indicates to join groups from different data sets. A group is defined that data items related to a same data object but the data items from a same data set. The indication further indicates that one or more identifiers associated with data items are related to a same data object. At least one of the one or more identifiers associated with or corresponding to one or more processed data items in the first processed data set **316a** and at least the other one of the one or more identifiers associated with or corresponding to one or more processed data items in the second processed data set **316b.** The join rule further includes one or more indications indicating a mapping between the at least one of the one or more identifiers and the first processed data set **316a** and a mapping between the at least the other one of the one or more identifiers and the second processed data set **316b.**

In some embodiments, the join rule further indicates a first type of concatenation and a second type of concatenation where a joining function joins a first processed data set **316a** and a second processed data set **316b** based on the first type or second type. In the first type, each processed data item in a first processed group is concatenated with one processed data item in a second processed group. In the second type, each processed data item in a first processed group is concatenated with multiple processed data items in a second processed group. A processed group is defined that processed data items related to a same data object but the processed data items from a same processed data set

In some embodiments, when data items from the first data set **308a** arrives at the first sorting function **310a,** the first sorting function **310a** firstly groups all the data items corresponding to a same data object into a same group to obtain one or more first groups, according to the first sorting instruction **302a,** for example, two data items related to ID_1 in the first data set are grouped to a first group A. One data item related to ID_2 is grouped to a first group B. The ID_1 and ID_2 are not mapped to a same data object. The first group A and the first group B are included in the first sorted data set **312a.**

In some embodiments, the first sorting function **310a** filters or drops any first data item unrelated to any data object among the data objects, according to the first sorting instruction **302a.** Later, the first sorting function **310a** orders the one or more first groups, according to the order of the data objects indicated by the first sorting instruction **302a,** to obtain a first sorted data set **312a.** The first sorted data set **312a** is used for a generation of a first processed data set **316a.** The first sorted data set **312a** excludes any first data item unrelated to any data object among the data objects. At least one group from the first groups includes a single data item.

In some embodiments, the first sorting function **310a** generates or assigns a first identifier for the first sorted data set according to the first sorting instruction **302a.** The first identifier for the first sorted data set further indicates an association with a first identifier of a first processed data set.

In some embodiments, when data items from the second data set 308b arrives at the second sorting function **310b,** the second sorting function **310b** firstly groups all the data items corresponding to a same data object into a same group to obtain one or more second groups, according to the second sorting instruction **302b,** for example, one data item related to ID_A in the second data set are grouped to a second group A. One data item related to ID_B is grouped to a second group B. The ID_A and ID_B are not mapped to a same data object. The second group A and the second group B are included in the second sorted data set 312b.

In some embodiments, the second sorting function **310b** filters or drops any second data item unrelated to any data object among the data objects, according to the second sorting instruction **302b.** Later, the second sorting function **310b** orders the one or more second groups, according to the order of the data objects indicated by the second sorting instruction **302b,** to obtain a second sorted data set **312b.** The second sorted data set **312b** is used for a generation of a second processed data set **316b.** The second sorted data set **312b** excludes any second data item unrelated to any data object among the data objects. At least one group from the second groups includes a single data item.

In some embodiments, the second sorting function **310b** generates a second identifier for the second sorted data set according to the second sorting instruction **302b.** The second identifier for the second sorted data set further indicates an association with a second identifier of a second processed data set.

In some embodiments, the first sorted data set **312a** is sent to a first processing function **314a.** The first processing function **314a** processes the one or more first groups from the first sorted data set **312a,** to obtain one or more first processed groups. A particular first processed group is output of processing a particular first group, and each data item in the particular first group corresponds to a processed data item in the particular first processed group. Those first processed groups are in a first processed data set **316a.** The first processing function **314a** processes the one or more first groups in an order which is the same as the order of the one or more first groups in the first sorted data set.

In some embodiments, the first processing function 314a generates an identifier of the first processed data set based on the identifier for the first sorted data set and the first identifier indication. The identifier of the first processed data set is associated with the identifier for the first sorted data set.

In some embodiments, the second sorted data set **312b** is sent to a second processing function **314b.** The second processing function **314b** processes the one or more second groups from the second sorted data set **312b,** to obtain one or more second processed groups. A particular second processed group is output of processing a particular second group, and each data item in the particular second group corresponds to a processed data item in the particular second processed group. Those second processed groups are in a second processed data set **316b.** The second processing function **314b** processes the one or more second groups in an order which is the same as the order of the one or more second groups in the second sorted data set.

In some embodiments, the second processing function **314b** generates an identifier of the second processed data set based on the identifier for the second sorted data set and the second identifier indication. The identifier of the second processed data set is associated with the identifier for the second sorted data set.

In some embodiments, the first processed data set **316a** and the second processed data set **316b** may then be provided to a joining function **318** for combining. Before implementing join operation, the joining function determines the first processed data set **316a** and the second processed data set **316b** according to data set identifiers included in the join rule **304.** The joining function **318** joins the particular first processed group and the particular second processed group by concatenating each processed data item in the first processed group with one or more processed data items in the second processed group, according to the indication in the join rule **304.** Each processed data item in the particular first processed group and each processed data item in the particular second processed group are identified to be related to the same data object according to the indication in the join rule, and each processed data item in the particular first processed group is concatenated with each processed data item in the particular second processed group. For example, a first processed group related to ID_1 and a second processed group related to ID_B are identified to be related to a same data object, each processed data item in the first processed group and each processed data item in the second processed group is concatenated to a joined data item in a joined data set **320.** Finally, the joined data set **320** may be sent to a data consumer **322** for further process.

In some embodiments, if the size of a first processed group is equal to the size of a second processed group, joining function **318** joins the particular first processed group and the particular second processed group by concatenating each processed data item in the first processed group with one processed data item in the second processed group according to the first type in the join rule **304.** In this case, each processed data item in the particular first processed group and each processed data item in the particular second processed group are identified to be related to the same data object according to the indication in the join rule, and each processed data item in a first processed group is concatenated with one processed data item in a second processed group.

In some embodiments, if the size of a first processed group is not equal to the size of a second processed group, the joining function **318** joins the particular first processed group and the particular second processed group by concatenating each processed data item in the second processed group with multiple processed data items in the first processed group according to the second type in the join rule **304.** In this case, each processed data item in the particular first processed group and each processed data item in the particular second processed group are identified to be related to the same data object according to the indication in the join rule, and each processed data item in a first processed group is concatenated with multiple processed data items in a second processed group.

In some embodiments, the joining function **318** sends the joined data set **320** a data consumer **322** for further process.

Embodiments of the present disclosure provide a system **300** which provides a technique for alignment of data items from different data sets by identifying these data items related to same data objects. Data items from different data sets are grouped, filtered, and ordered by the corresponding sorting functions, respectively. The joining function produces a single joined set of anonymous joined data item associated with a particular data object but which do not identify the particular data object. This joined data item can then be used by applications, for example for vFL. The system **300** may be used in a communication network, especially in scenarios where a data object has different identifiers in different data sets.

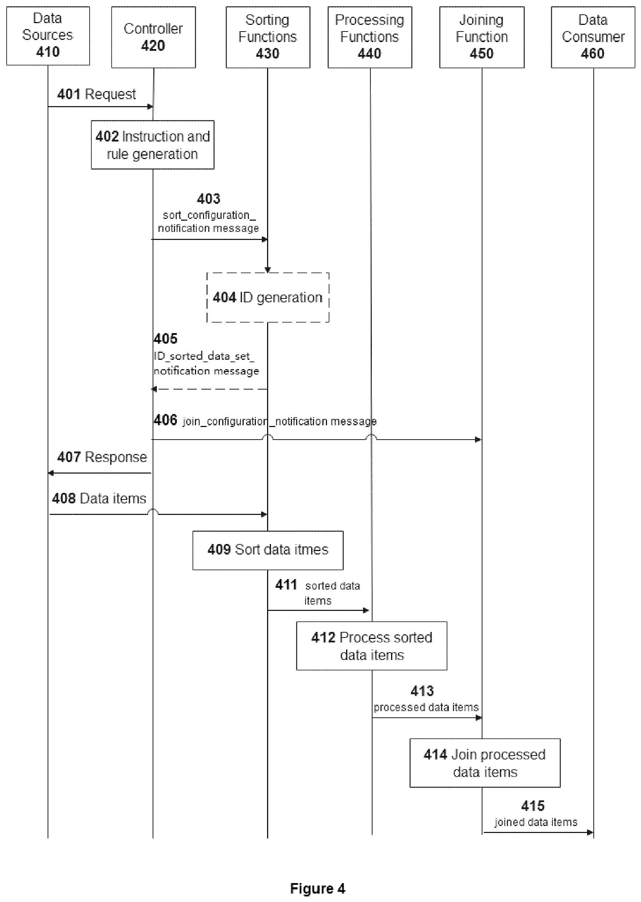

Figure 4 depicts a call flow of the procedure of data management triggered by a data consumer (not shown in Figure 4) to one or more data sources **410.** In the procedure, when receiving a data alignment service request (in step **401**), a controller **420** may request for identifier mapping and generates at least one or more sorting instructions and a join rule in step **402.** The controller **420** sends sorting instructions to sorting functions **430** for configuration, respectively, in step **403** and sends the join rule to a joining function **450** for configuration in step **405.** Data items from different data sets (for example first data set **410a** and second data set **410b**) provided by different data sources **410,** are received in step **408** and sorted separately by respective sorting functions **430** in step **409,** to obtain different sorted data sets according to the respective sorting instructions. These different sorted data sets are sent to respective processing functions **440** in step **411.** Different processed data sets are joined by a joining function **450** according to the join rule in step **414.** The joining function **450** sends the joined data set to a data consumer **460** for further process in step **415.**

In some embodiments, there may be at least two data sets from different data sources **410,** at least two sorting functions **430,** at least two processing functions **440** and one joining function **450.**

In some embodiments, a request (e.g., a data alignment service request) is sent to the controller **420** from a data source **410** in step **401.** For example, a first request from a first data source **410** includes a first identifier for a first data set **410a** including one or more data items and the first request also includes first identifiers related to the one or more data items in the first data set. The second request from a second data source **410** includes a second identifier for a second data set **410b** including one or more data items and the second request also includes second identifiers related to the one or more data items in the second data set.

In some embodiments, the controller **420** may request for ID mapping from a mapping function, to obtain a first order set for the first identifiers related to data items and a second order set for the second identifiers related to data items. The request may include the first identifier for the first data set, the first identifiers related to the one or more data items in the first data set, the second identifier for the second data set, the second identifiers related to the one or more data items in the second data set.

In some embodiments, if one of first identifiers and one of second identifiers are mapped to a same data object, the value of a first element corresponding to the one of the first identifiers is the same with the value of a second element corresponding to the one of the second identifiers, where the first element is in the first order set and the second element is in the second order set.

The controller **420** generates a first sorting instruction according to the first order set, and a second sorting instruction according to the second order set in step **402.** Then, in step **403** the controller **420** sends a first notification to the first sorting function **430a** and a second notification to the second sorting function **430**b. The first notification includes the first sorting instruction, and the second notification includes the second sorting instruction. The controller **420** may send a notification by sending a sort_configuration_notification message.

In some embodiments, the first sorting instruction indicates data objects in an order based on the first order set, and has an indication. The indication may indicate: (1) at least one of the first set of identifiers and at least one of the second set of identifiers mapped to one same data object, (2) at least another of the first set of identifiers and at least another of the second set of identifiers mapped to another same data object. The second sorting instruction indicates data objects in an order based on the second order set, and has the indication.

In some embodiments, the first sorting instruction further includes information identifying the first data set and the first sorted data set, for example, the identifier for the first data set and an identifier for the first sorted data set. The first sorting instruction may further include a first identifier indication which indicates an identifier of a first processed data set to be associated with the identifier of the first sorted data set. The second sorting instruction includes information identifying the second data set and the second sorted data set, for example, the identifier for the second data set, and an identifier for the second sorted data set. The second sorting instruction further includes a second identifier indication that indicates an identifier of a second processed data set to be associated with the identifier of the second sorted data set. If the identifier for the first data set is the same as (or associated with) a data set identifier indicating the first processed data set, and the identifier for the second data set is the same as (or associated with) a data set identifier indicating the second processed data set, the controller 420 generates a join rule based on the information. The information identifying the first sorted data set is the same as a data set identifier indicating the first processed data set, and the information identifying the second sorted data set is the same as a data set identifier indicating the second processed data set.

In some embodiments, the first sorting instruction further includes information identifying the first data set, for example, an identifier for the first data set. The second sorting instruction further includes information identifying the second data set, for example, an identifier for the second data set. After receiving the first sort_configuration_notification message, the first sorting function **430a** generates information identifying the first sorted data set according to the identifier for the first data set in step **404.** After receiving the second sort_configuration_notification message, the second sorting function **430b** generates information identifying the second sorted data set according to the identifier for the second data set in step **404.** In step **405,** the first sorting function 430a sends a response to the controller **420.** The response includes the information identifying the first sorted data set to the controller **420.** The second sorting function **430b** sends a response to the controller **420.** The response includes the information identifying the second sorted data set to the controller **420.** In Figure 4, the response received by the controller **420** is an ID_sorted_data_set_notification message. In some embodiments, step **404** and step **405** are optional. There is no limitation of an order between steps **403-405** and **406.** Optionally, in step **407,** the controller **420** sends a response to the data source **410** which sent the request to the controller **420.** The response is an acknowledgement corresponding to the request received from the data source **410.**

In one example of step **402,** the controller **420** generates a join rule based on information identifying the first sorted data set from the first sorting function and information identifying the second sorted data set from the second sorting function. The information identifying the first data set is the same as a data set identifier indicating the first processed data set, and the information identifying the second data set is the same as a data set identifier indicating the second processed data set.

In some embodiments, the join rule includes a first data set identifier indicating the first processed data set and a second data set identifier indicating the second processed data set. The join rule further has an indication that indicates to join groups from different data sets. A group is defined that data items related to a same data object but the data items from a same data set. The indication further indicates that each data object relates to one or more identifiers based on the first order set and the second order set. At least one of the one or more identifiers associates with or corresponds to the first processed data set and at least the other one of the one or more identifiers associates or with corresponds to the second processed data set.

In some embodiments, the join rule further includes one or more indications indicating a mapping between the at least one of the one or more identifiers and the first processed data set and a mapping between the at least the other one of the one or more identifiers and the second processed data set. The join rule further indicates a first type of concatenation and a second type of concatenation where a joining function joins a first processed data set and a second processed data set based on the first type or second type. In the first type, each processed data item in a first processed group is concatenated with one processed data item in a second processed group. In the second type, each processed data item in a first processed group is concatenated with multiple processed data items in a second processed group. A processed group is defined that processed data items related to a same data object but the processed data items from a same processed data set.

In some embodiments, the controller **420** sends a notification such as a join_configuration_notification message to the joining function **450** in step **406.** The message includes the join rule. The joining function **450** may store all or a part of the join rule.

In some embodiments, when data items from the first data set **410a** arrive at the first sorting function **430a** in step **408,** the first sorting function **430a** sorts the data items in step **409.** For example, the first sorting function **430a** firstly groups all the data items corresponding to a same data object into a same group, to obtain one or more first groups. Then, the first sorting function **430a** orders the one or more first groups according to the order of the data objects indicated by the first sorting instruction, to obtain a first sorted data set. The first sorted data set is used for a generation of a first processed data set. The first sorting function **430a** generates or assigns an identifier for the first sorted data set according to the first sorting instruction. Finally, in step **411** the first sorting function **430a** transmits the first sorted data set along with the identifier for the first sorted data set and a first identifier indication which indicates an identifier for a first processed data set should be associated with the identifier for the first sorted data set, to a first processing function **440a.**

In some embodiments, when data items from the second data set **410b** arrive at the second sorting function **430b** in step **408,** the first sorting function 430b sorts the data items in step **409.** For example, the second sorting function **430b** firstly groups all the data items corresponding to a same data object into a same group to obtain one or more second groups. Then, the second sorting function **430b** orders the one or more second groups according to the order of the data objects indicated by the second sorting instruction, to obtain a second sorted data set. The second sorted data set is used for a generation of a second processed data set. The second sorting function **430b** assigns an identifier for the second sorted data set according to the second sorting instruction. Finally, in step **411** the second sorting function **430b** transmits the second sorted data set together with the identifier for the second sorted data set and a second identifier indication which indicates an identifier for a second processed data set should be associated with the identifier for the second sorted data set, to a second processing function **440b.**

In some embodiments, when receiving the first sorted data set, the first processing function **440a** processes the one or more first groups to obtain one or more first processed group. Each of the one or more first groups corresponds to a first processed group. A particular first processed group is an output of processing a particular first group, and each data item in the particular first group corresponds to a processed data item in the particular first processed group. The first processing function **440a** processes the one or more first groups in an order which is the same as the order of the one or more first groups in the first sorted data set. These first processed groups are in a first processed data set. The first processing function **440a** assigns or generates an identifier for the first processed data set according to the identifier of the first sorted data set and the first identifier indication. The first processing function **440a** sends the first processed data set with the identifier of the first processed data set, to the joining function **450.**

In some embodiments, when receiving the second sorted data set, the second processing function **440b** processes the one or more second groups to obtain one or more second processed group in step **412.** A particular second processed group is output of processing a particular second group, and each data item in the particular second group corresponds to a processed data item in the particular second processed group. The second processing function **440b** processes the one or more second groups in an order which is the same as the order of the one or more second groups in the second sorted data set. These second processed groups are in a second processed data set. The second processing function **440b** assigns or generates an identifier for the second processed data set according to the identifier for the second sorted data set and the second identifier indication. The second processing function **440b** sends the second process data set with the identifier of the second processed data set, to the joining function **450** in step **413.**

In some embodiments, after receiving the first processed data set and the second processed data set, the joining function **450** implements join operation in step **414** to obtain a single joined data set, according to the join rule. The joining function **450** firstly determines the first processed data set and the second processed data set according to data set identifiers included in the join rule. Then, the joining function **450** joins the particular first processed group and the particular second processed group by concatenating each processed data item in the first processed group with one or more processed data items in the second processed group, according to the join rule. Each processed data item in the particular first processed group and each processed data item in the particular second processed group are related to the same data object. The joining function **450** sends the single joined data set to a data consumer **450** for further process in step **415.**

Embodiments of the present disclosure provide a system 400 which provides a technique for alignment of data items from different data sets by identifying these data items related to same data objects. The sorting instructions and the join rule are generated by the controller according to the response (e.g. including the order set) for identifier mapping by the mapping function. This could provide a method to find the intersection of these data sets, in order to determine which data items are related to the same data object.

The first sorting function sorts data items according to the first sorting instruction and the second sorting function sorts data items according to the second sorting instruction. The sorting functions can identify data items related to a same data object but not identifying which do not identify the particular data object. This could protect privacy of data object.

A technical advantage may be that the joining function, according to the rule, produces a single joined set of anonymous joined data items which can be used by applications, for example for vFL. The joined set of anonymous joined data items is associated with a particular data object while the joined set of anonymous joined data items does not identify the particular data object. The rule indicates how the joining function is expected to produce the joined set of anonymous joined data items so as to support applications in a scenario where a data object has different identifiers in different data sets.

A technical advantage may be that when different data items are associated to a same data object in a scenario including groups in different sizes, different rules enable different data items from different groups to be concatenated. Therefore, different numbers of data items associated with a particular data object can be concatenated flexibly and correctly to support applications for vFL.

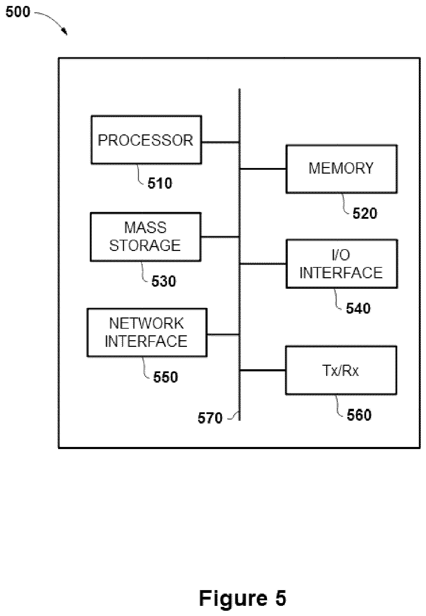

Figure 5 is a schematic diagram of an electronic device **500,** such as a computing device or system, which may be configured to perform any or all of the steps as one or various functions performed in the above methods described herein, according to different embodiments of the present disclosure. It should be appreciated that the systems and architectures described above can include multiple electronic devices configured with non-transitory machine readable instructions, which when executed by the processors of the electronic devices, configure the devices for executed the methods described herein.

As shown, the device includes a processor **510,** memory **520,** non-transitory mass storage **530,** *I*/*O* interface **540,** network interface **550,** and a transceiver **560,** all of which are communicatively coupled via bi-directional bus **570.** According to certain embodiments, any or all of the depicted elements may be utilized, or only a subset of the elements. Further, the device **500** may contain multiple instances of certain elements, such as multiple processors, memories, or transceivers. Also, elements of the hardware device may be directly coupled to other elements without the bi-directional bus.

The memory **520** may include any type of non-transitory or non-transient memory such as static random access memory (SRAM), dynamic random access memory (DRAM), synchronous DRAM (SDRAM), read-only memory (ROM), any combination of such, or the like. The mass storage element **530** may include any type of non-transitory storage device, such as a solid state drive, hard disk drive, a magnetic disk drive, an optical disk drive, USB drive, or any computer program product configured to store data and machine executable program code. According to certain embodiments, the memory **520** or mass storage **530** may have recorded thereon instructions (e.g. machine readable instructions) executable by the processor **510** for performing any of the aforementioned method steps described above.

Acts associated with the methods described herein can be implemented as coded instructions in a computer program product. In other words, the computer program product is a computer-readable medium upon which software code is recorded to execute the methods when the computer program product is loaded into memory and executed by the processor of a computing device.

Acts associated with the methods described herein can be implemented as coded instructions in plural computer program products. For example, a first portion of the method may be performed using one computing device, and a second portion of the method may be performed using another computing device, server, or the like. In this case, each computer program product is a computer-readable medium upon which software code is recorded to execute appropriate portions of the method when a computer program product is loaded into memory and executed on the processor of a computing device.

Further, each step of the methods may be executed on any computing device, such as a personal computer, server, PDA, or the like and pursuant to one or more, or a part of one or more, program elements, modules or objects generated from any programming language, such as C++, Java, or the like. In addition, each step, or a file or object or the like implementing each said step, may be executed by special purpose hardware or a circuit module designed for that purpose.

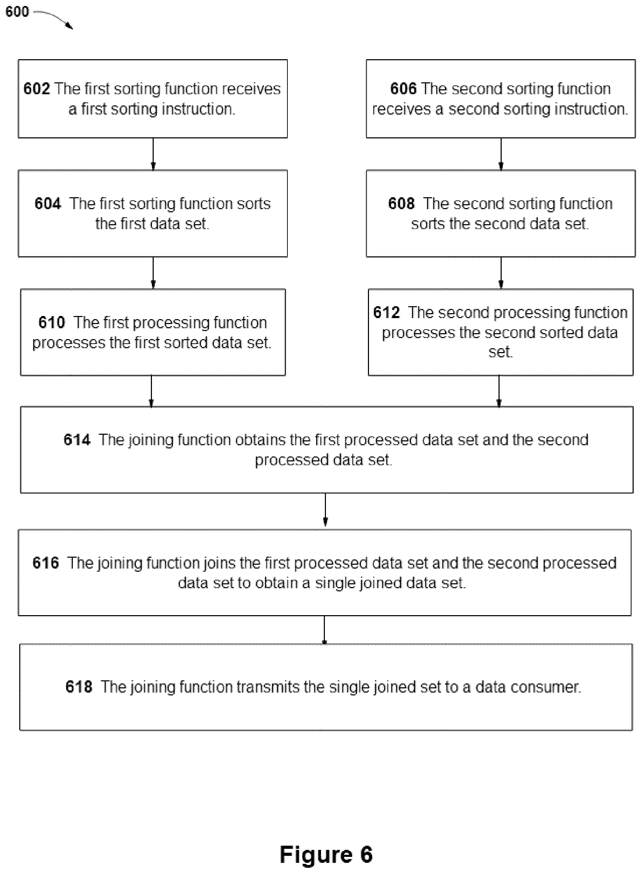

Figure 6 presents a flow diagram illustrating method 600 for providing for alignment data items related to same data object where the data items are from different data sets and the same data object has different identification information in different data sets, according to embodiments of the prevent invention.

A first sorting instruction is received by a first sorting function in step **602.** This first sorting instruction indicates data objects in an order. This first sorting instruction may be used for sorting a first data set from a first source. The first data set includes first data items at least one of which is related to a data object among the data objects.

The first sorting function sorts the first data set according to the first sorting instruction in step **604.** In the sorting action, the first sorting function groups, from the first data items, all the data items corresponding to a same data object into a same group to obtain one or more first groups, and then order the one or more first groups according to the order of the data objects indicated by the first sorting instruction to obtain a first sorted data set. Here, the first sorted data set is used for a generation of a first processed data set.

A second sorting instruction is received by a second sorting function in step 606. This second sorting instruction indicates data objects in an order. This second sorting instruction is used for sorting a second data set from a second source. The second data set includes second data items at least one of which is related to a data object among the data objects.

The second sorting function sorts the second data set according to the second sorting function in step 608. The sort action is implemented as: (1) group all the data items corresponding to a same data object into a same group to obtain one or more second groups; (2) order the one or more second groups according to the order of the data objects indicated by the second sorting instruction to obtain a second sorted data set, where data items from the second data set.

The first sorted data set is processed to be a first processed data set in step **610.** The second sorted data set is processed to be a second processed data set in step **612.** The first processed data set and the second processed data set are sent to a joining function in step **614.** The joining function joins the first processed data set and the second processed data set to obtain a single joined data set in step **616.** The joining function transmits the joined data set to a data consumer in step **618.**

The system in embodiments of the present disclosure provides a technique realizing alignment of data items from different data sets by identifying these data items related to same data objects. For example, when an intersection of these data sets is found, it can be determined which data items are related to the same data object and data management can be implemented accordingly. The sorting instructions and the optional join rule are generated by the controller according to the response (e.g. including the order set) for identifier mapping by the mapping function. Furthermore, each of the sorting functions is able to identify data items related to a same data object but not able to identify a particular data object, so that privacy of data object can be protected.

Further, the joining function produces a single joined set of anonymous joined data item associated with a particular data object but which do not identify the particular data object. This joined data item can then be used by applications, e.g., for vFL. With the introduction of sorting functions, processing functions, and a joining function, the system may be used in a communication network, especially in scenarios where a data object has different identifiers in different data sets. Further, the system may provide a technique for concatenating different data items from different groups, especially in scenarios where each size of the groups is different.

Although the present disclosure has been described with reference to specific features and embodiments thereof, it is evident that various modifications and combinations can be made thereto without departing from the disclosure. The specification and drawings are, accordingly, to be regarded simply as an illustration of the invention as defined by the appended claims,

## Claims

1. A computer-implemented method for data management in a communication network comprising:
receiving (S602), by a first sorting function (310a, 430a), a first sorting instruction (302a) for sorting a first data set (102a, 308a, 410a) from a first source, wherein the first sorting instruction (302a) indicates data objects in an order, and the first data set (102a, 308a, 410a) includes first data items at least one of which is related to a data object among the data objects;
sorting (S604) the first data set (102a, 308a, 410a), by the first sorting function (310a, 430a), by grouping, from the first data items, all the data items (212a) corresponding to a same data object into a same group to obtain one or more first groups, and ordering the one or more first groups according to the order of the data objects indicated by the first sorting instruction (302a) to obtain a first sorted data set (312a); wherein the first sorted data set (312a) is used for a generation of a first processed data set;
receiving (S606), by a second sorting function (310b, 430b), a second sorting instruction (302b) for sorting a second data set (102b, 308b, 410b) from a second source, wherein the second sorting instruction (302b) indicates the data objects in the order, and the second data set (102b, 308b, 410b) includes data items (212b) at least one of which is related to the data object among the data objects;
sorting (S608) the second data set (102b, 308b, 410b), by the second sorting function (310b, 430b), by grouping, from the second data items, all the data items (212b) corresponding to a same data object into a same group to obtain one or more second groups, and ordering the one or more second groups according to the order of the data objects indicated by the second sorting instruction (302b);
wherein the second sorted data set (312b) is used for a generation of a second processed data set;
wherein the first sorted data set and the second sorted data set (312b) are transmitted synchronized, so that, in each processing cycle, a first processing function (314a, 440a) and a second processing function (314b, 440b) respectively process the first data items and the second data items that relate to same data objects;
obtaining, by a joining function (318, 450), the first processed data set and the second processed data set;
joining (S616), by the joining function (318, 450), the first processed data set and the second processed data set to obtain a single joined data set; and
transmitting (S618), by the joining function (318, 450), the single joined data set to a data consumer (216, 322, 460).

2. The method of claim 1, wherein the first sorting instruction (302a) indicates data objects in order by including a first list of identifiers of the data objects, and the second sorting instruction (302b) indicates data objects in order by including a second list of identifiers of the data objects.

3. The method of claim 1 or 2, wherein the first sorted data set (312a) excludes any first data item unrelated to any data object among the data objects, and the second sorted data set (312b) excludes any second data item unrelated to any data object among the data objects.

4. The method of any one of claims 1 to 3, the first processed data set including one or more first processed group, the first processed group is obtained through processing the first group, the second processed data set including one or more second processed group, the second processed group is obtained through processing the second group, wherein each processed data item in the particular first processed group and each processed data item in the particular second processed group are related to the same data object, and the joining step comprises:
joining the particular first processed group and the particular second processed group by concatenating each processed data item in the first processed group with one or more processed data items (214a, 214b) in the second processed group.

5. The method of claim 4, wherein the joining step is based on a rule (304), the method further comprises:
receiving, by the joining function (318, 450), the rule (304), wherein the rule (304) indicates to join processed groups that are related to the same data object, and indicates that each data object relates to one or more identifiers, wherein at least one of the one or more identifiers corresponds to the first processed data set and at least the other one of the one or more identifiers corresponds to the second processed data set, wherein the rule (304) further includes a data set identifier indicating the first processed data set.

6. The method of claim 5, wherein the rule (304) further includes one or more indications indicating a mapping between the at least one of the one or more identifiers and the first processed data set and a mapping between the at least the other one of the one or more identifiers and the second processed data set, wherein the rule (304) further includes the other data set identifier indicating the second processed data set.

7. The method of claim 5 or 6, wherein the rule (304) further indicates a first type of concatenation, wherein the joining step is performed based on to the indication so that each processed data item in the first processed group is concatenated with one processed data item in the second processed group.

8. The method of any one of claims 1-7, wherein the rule (304) further indicates a second type of concatenation, wherein the joining step is performed based on to the indication so that each processed data item in the first processed group is concatenated with multiple processed data items (214a, 214b) in the second processed group.

9. The method of any one of claims 1-8, wherein the first sorting instruction (302a) is sent from a controller (324, 420) and includes information identifying the first data set (102a, 308a, 410a), and the second sorting instruction (302b) is sent from the controller (324, 420) and includes information identifying the second data set (102b, 308b, 410b); wherein the information identifying the first data set (102a, 308a, 410a) is the same as a data set identifier indicating the first processed data set, and the information identifying the second data set (102b, 308b, 410b) is the same as a data set identifier indicating the second processed data set.

10. The method of claim 9, wherein the first sorting instruction (302a) further includes information identifying the first sorted data set (312a), and the second sorting instruction (302b) further includes information identifying the second sorted data set (312b);
wherein the information identifying the first sorted data set (312a) is the same as a data set identifier indicating the first processed data set, and the information identifying the second sorted data set (312b) is the same as a data set identifier indicating the second processed data set.

11. A computer-implemented communication system comprising a first sorting function (310a, 430a), a second sorting function (310b, 430b) and a joining function (318, 450), wherein:
the first sorting function (310a, 430a) is configured to:
receive (S602) a first sorting instruction (302a) for sorting a first data set (102a, 308a, 410a) from a first source, wherein the first sorting instruction (302a) indicates data objects in an order, and the first data set (102a, 308a, 410a) includes first data items at least one of which is related to a data object among the data objects;
sort (S604) the first data set (102a, 308a, 410a) by grouping, from the first data items, all the data items (212a) corresponding to a same data object into a same group to obtain one or more first groups, and ordering the one or more first groups according to the order of the data objects indicated by the first sorting instruction (302a) to obtain a first sorted data set (312a); wherein the first sorted data set (312a) is used for a generation of a first processed data set;
the second sorting function (310b, 430b) is configured to:
receive (S606) a second sorting instruction (302b) for sorting a second data set (102b, 308b, 410b) from a second source, wherein the second sorting instruction (302b) indicates the data objects in the order, and the second data set (102b, 308b, 410b) includes data items (212b) at least one of which is related to the data object among the data objects;
sort (S608) the second data set (102b, 308b, 410b) by grouping, from the second data items, all the data items (212b) corresponding to a same data object into a same group to obtain one or more second groups, and ordering the one or more second groups according to the order of the data objects indicated by the second sorting instruction (302b); wherein the second sorted data set (312b) is used for a generation of a second processed data set;
wherein the first sorted data set and the second sorted data set (312b) are transmitted synchronized, so that, in each processing cycle, a first processing function (314a, 440a) and a second processing function (314b, 440b) respectively process the first data items and the second data items that relate to same data objects; and
the joining function (318, 450) is configured to:
obtain the first processed data set and the second processed data set;
join (S616) the first processed data set and the second processed data set to obtain a single joined data set; and
transmit (S618) the single joined data set to a data consumer (216, 322, 460).

12. The communication system of claim 11, wherein the first sorting instruction (302a) is configured to indicate data objects in order by including a first list of identifiers of the data objects, and the second sorting instruction (302b) is configured to indicate data objects in order by including a second list of identifiers of the data objects.

13. The communication system of claim 11 or 12, wherein the first sorted data set (312a) excludes any first data item unrelated to any data object among the data objects, and the second sorted data set (312b) excludes any second data item unrelated to any data object among the data objects.

14. The communication system of any one of claims 11 to 13, wherein the first processed data set including one or more first processed group, the first processed group is obtained through processing the first group, the second processed data set including one or more second processed group, the second processed group is obtained through processing the second group, each processed data item in the particular first processed group and each processed data item in the particular second processed group are related to the same data object, and the joining step comprises:
joining the particular first processed group and the particular second processed group by concatenating each processed data item in the first processed group with one or more processed data items (214a, 214b) in the second processed group.

15. The communication system of claim 14, wherein the joining step is based on a rule (304), the joining function (318, 450) is further configured to:
receive the rule (304), wherein the rule (304) indicates to join processed groups that are related to the same data object, and indicates that each data object relates to one or more identifiers, wherein at least one of the one or more identifiers corresponds to the first processed data set and at least the other one of the one or more identifiers corresponds to the second processed data set, wherein the rule (304) further includes a data set identifier indicating the first processed data set.

16. The communication system of claim 15, wherein the rule (304) further includes one or more indications indicating a mapping between the at least one of the one or more identifiers and the first processed data set and a mapping between the at least the other one of the one or more identifiers and the second processed data set, wherein the rule (304) further includes the other data set identifier indicating the second processed data set.

17. The communication system of claim 15 or 16, wherein the rule (304) further indicates a first type of concatenation, wherein the joining step is performed based on to the indication so that each processed data item in the first processed group is concatenated with one processed data item in the second processed group.

18. The communication system of any one of claims 15-17, wherein the rule (304) further indicates a second type of concatenation, wherein the joining step is performed based on to the indication so that each processed data item in the first processed group is concatenated with multiple processed data items (214a, 214b) in the second processed group.

19. The communication system of any one of claims 11-18, wherein the first sorting instruction (302a) is sent from a controller (324, 420) and includes information identifying the first data set (102a, 308a, 410a), and the second sorting instruction (302b) is sent from the controller (324, 420) and includes information identifying the second data set (102b, 308b, 410b); wherein the information identifying the first data set (102a, 308a, 410a) is the same as a data set identifier indicating the first processed data set, and the information identifying the second data set (102b, 308b, 410b) is the same as a data set identifier indicating the second processed data set.

20. The communication system of claim 19, wherein the first sorting instruction (302a) further includes information identifying the first sorted data set (312a), and the second sorting instruction (302b) further includes information identifying the second sorted data set (312b); wherein the information identifying the first sorted data set (312a) is the same as a data set identifier indicating the first processed data set, and the information identifying the second sorted data set (312b) is the same as a data set identifier indicating the second processed data set.

## Patentansprüche

1. Computerimplementiertes Verfahren zur Datenverwaltung in einem Kommunikationsnetz, umfassend:
Empfangen (S602), durch eine erste Sortierfunktion (310a, 430a), einer ersten Sortieranweisung (302a) zum Sortieren eines ersten Datensatzes (102a, 308a, 410a) aus einer ersten Quelle, wobei die erste Sortieranweisung (302a) Datenobjekte in einer Reihenfolge angibt und der erste Datensatz (102a, 308a, 410a) erste Datenelemente einschließt, von denen sich mindestens eines auf ein Datenobjekt unter den Datenobjekten bezieht;
Sortieren (S604) des ersten Datensatzes (102a, 308a, 410a), durch die erste Sortierfunktion (310a, 430a), durch Gruppieren, aus den ersten Datenelementen, all der Datenelemente (212a), die demselben Datenobjekt entsprechen, in eine selbe Gruppe, um eine oder mehrere erste Gruppen zu erhalten, und Ordnen der einen oder der mehreren ersten Gruppen gemäß der Reihenfolge der Datenobjekte, die durch die erste Sortieranweisung (302a) angegeben wird, um einen ersten sortierten Datensatz (312a) zu erhalten; wobei der erste sortierte Datensatz (312a) zur Erzeugung eines ersten verarbeiteten Datensatzes verwendet wird; Empfangen (S606), durch eine zweite Sortierfunktion (310b, 430b), einer zweiten Sortieranweisung (302b) zum Sortieren eines zweiten Datensatzes (102b, 308b, 410b) aus einer zweiten Quelle, wobei die zweite Sortieranweisung (302b) die Datenobjekte in der Reihenfolge angibt und der zweite Datensatz (102b, 308b, 410b) Datenelemente (212b) einschließt, von denen sich mindestens eines auf das Datenobjekt unter den Datenobjekten bezieht;
Sortieren (S608) des zweiten Datensatzes (102b, 308b, 410b), durch die zweite Sortierfunktion (310b, 430b), durch Gruppieren, aus den zweiten Datenelementen, all der Datenelemente (212b), die einem selben Datenobjekt entsprechen, in eine selbe Gruppe, um eine oder mehrere zweite Gruppen zu erhalten, und Ordnen der einen oder der mehreren zweiten Gruppen gemäß der Reihenfolge der Datenobjekte, die durch die zweite Sortieranweisung (302b) angegeben wird;
wobei der zweite sortierte Datensatz (312b) zur Erzeugung eines zweiten verarbeiteten Datensatzes verwendet wird;
wobei der erste sortierte Datensatz und der zweite sortierte Datensatz (312b) synchronisiert übertragen werden, sodass in jedem Verarbeitungszyklus eine erste Verarbeitungsfunktion (314a, 440a) und eine zweite Verarbeitungsfunktion (314b, 440b) die ersten Datenelemente beziehungsweise die zweiten Datenelemente, die sich auf dieselben Datenobjekte beziehen, verarbeiten;
Erhalten, durch eine Verknüpfungsfunktion (318, 450), des ersten verarbeiteten Datensatzes und des zweiten verarbeiteten Datensatzes;
Verknüpfen (S616), durch die Verknüpfungsfunktion (318, 450), des ersten verarbeiteten Datensatzes und des zweiten verarbeiteten Datensatzes, um einen einzigen verknüpften Datensatz zu erhalten; und
Übertragen (S618), durch die Verknüpfungsfunktion (318, 450), des einzigen verknüpften Datensatzes an einen Datenkonsumenten (216, 322, 460).

2. Verfahren nach Anspruch 1, wobei die erste Sortieranweisung (302a) Datenobjekte durch Einschließen einer ersten Liste von Kennungen der Datenobjekte in einer Reihenfolge angibt, und die zweite Sortieranweisung (302b) Datenobjekte durch Einschließen einer zweiten Liste von Kennungen der Datenobjekte in einer Reihenfolge angibt.

3. Verfahren nach Anspruch 1 oder 2, wobei der erste sortierte Datensatz (312a) alle ersten Datenelemente ausschließt, die sich auf kein Datenobjekt unter den Datenobjekten beziehen, und der zweite sortierte Datensatz (312b) alle zweiten Datenelemente ausschließt, die sich auf kein Datenobjekt unter den Datenobjekten beziehen.

4. Verfahren nach einem der Ansprüche 1 bis 3, wobei der erste verarbeitete Datensatz eine oder mehrere erste verarbeitete Gruppen einschließt, die erste verarbeitete Gruppe durch Verarbeiten der ersten Gruppe erhalten wird, der zweite verarbeitete Datensatz eine oder mehrere zweite verarbeitete Gruppen einschließt, die zweite verarbeitete Gruppe durch Verarbeiten der zweiten Gruppe erhalten wird, wobei sich jedes verarbeitete Datenelement in der jeweiligen ersten verarbeiteten Gruppe und jedes verarbeitete Datenelement in der jeweiligen zweiten verarbeiteten Gruppe auf dasselbe Datenobjekt bezieht, und der Verknüpfungsschritt Folgendes umfasst:
Verknüpfen der jeweiligen ersten verarbeiteten Gruppe und der jeweiligen zweiten verarbeiteten Gruppe durch Verketten jedes verarbeiteten Datenelements in der ersten verarbeiteten Gruppe mit einem oder mehreren verarbeiteten Datenelementen (214a, 214b) in der zweiten verarbeiteten Gruppe.

5. Verfahren nach Anspruch 4, wobei der Verknüpfungsschritt auf einer Regel (304) basiert, wobei das Verfahren ferner Folgendes umfasst:
Empfangen, durch die Verknüpfungsfunktion (318, 450), der Regel (304), wobei die Regel (304) angibt, verarbeitete Gruppen, die sich auf dasselbe Datenobjekt beziehen, zu verknüpfen und angibt, dass sich jedes Datenobjekt auf eine oder mehrere Kennungen bezieht, wobei mindestens eine der einen oder mehreren Kennungen dem ersten verarbeiteten Datensatz entspricht und mindestens die eine andere der einen oder mehreren Kennungen dem zweiten verarbeiteten Datensatz entspricht, wobei die Regel (304) ferner eine Datensatzkennung einschließt, die den ersten verarbeiteten Datensatz angibt.

6. Verfahren nach Anspruch 5, wobei die Regel (304) ferner eine oder mehrere Angaben einschließt, die eine Zuordnung zwischen der mindestens einen der einen oder mehreren Kennungen und dem ersten verarbeiteten Datensatz und eine Zuordnung zwischen der mindestens anderen der einen oder mehreren Kennungen und dem zweiten verarbeiteten Datensatz angeben, wobei die Regel (304) ferner die andere Datensatzkennung einschließt, die den zweiten verarbeiteten Datensatz angibt.

7. Verfahren nach Anspruch 5 oder 6, wobei die Regel (304) ferner eine erste Art der Verkettung angibt, wobei der Verknüpfungsschritt basierend auf der Angabe durchgeführt wird, so dass jedes verarbeitete Datenelement in der ersten verarbeiteten Gruppe mit einem verarbeiteten Datenelement in der zweiten verarbeiteten Gruppe verkettet wird.

8. Verfahren nach einem der Ansprüche 1-7, wobei die Regel (304) ferner eine zweite Art der Verkettung angibt, wobei der Verknüpfungsschritt basierend auf der Angabe durchgeführt wird, so dass jedes verarbeitete Datenelement in der ersten verarbeiteten Gruppe mit mehreren verarbeiteten Datenelementen (214a, 214b) in der zweiten verarbeiteten Gruppe verkettet wird.

9. Verfahren nach einem der Ansprüche 1-8, wobei die erste Sortieranweisung (302a) von einer Steuerung (324, 420) gesendet wird und Informationen einschließt, die den ersten Datensatz (102a, 308a, 410a) identifizieren, und die zweite Sortieranweisung (302b) von der Steuerung (324, 420) gesendet wird und Informationen einschließt, die den zweiten Datensatz (102b, 308b, 410b) identifizieren; wobei die Informationen, die den ersten Datensatz (102a, 308a, 410a) identifizieren, dieselben sind wie eine Datensatzkennung, die den ersten verarbeiteten Datensatz angibt, und die Informationen, die den zweiten Datensatz (102b, 308b, 410b) identifizieren, dieselben sind wie eine Datensatzkennung, die den zweiten verarbeiteten Datensatz angibt.

10. Verfahren nach Anspruch 9, wobei die erste Sortieranweisung (302a) ferner Informationen einschließt, die den ersten sortierten Datensatz (312a) identifizieren, und die zweite Sortieranweisung (302b) ferner Informationen einschließt, die den zweiten sortierten Datensatz (312b) identifizieren;
wobei die Informationen, die den ersten sortierten Datensatz (312a) identifizieren, dieselben sind wie eine Datensatzkennung, die den ersten verarbeiteten Datensatz angibt, und die Informationen, die den zweiten sortierten Datensatz (312b) identifizieren, dieselben sind wie eine Datensatzkennung, die den zweiten verarbeiteten Datensatz angibt.

11. Computerimplementiertes Kommunikationssystem, umfassend eine erste Sortierfunktion (310a, 430a), eine zweite Sortierfunktion (310b, 430b) und eine Verknüpfungsfunktion (318, 450), wobei:
die erste Sortierfunktion (310a, 430a) zu Folgendem konfiguriert ist:
Empfangen (S602) einer ersten Sortieranweisung (302a) zum Sortieren eines ersten Datensatzes (102a, 308a, 410a) aus einer ersten Quelle, wobei die erste Sortieranweisung (302a) Datenobjekte in einer Reihenfolge angibt und der erste Datensatz (102a, 308a, 410a) erste Datenelemente einschließt, von denen sich mindestens eines auf ein Datenobjekt unter den Datenobjekten bezieht;
Sortieren (S604) des ersten Datensatzes (102a, 308a, 410a) durch Gruppieren, aus den ersten Datenelementen, all der Datenelemente (212a), die demselben Datenobjekt entsprechen, in eine selbe Gruppe, um eine oder mehrere erste Gruppen zu erhalten, und Ordnen der einen oder der mehreren ersten Gruppen gemäß der Reihenfolge der Datenobjekte, die durch die erste Sortieranweisung (302a) angegeben wird, um einen ersten sortierten Datensatz (312a) zu erhalten; wobei der erste sortierte Datensatz (312a) zur Erzeugung eines ersten verarbeiteten Datensatzes verwendet wird;
die zweite Sortierfunktion (310b, 430b) zu Folgendem konfiguriert ist:
Empfangen (S606) einer zweiten Sortieranweisung (302b) zum Sortieren eines zweiten Datensatzes (102b, 308b, 410b) aus einer zweiten Quelle, wobei die zweite Sortieranweisung (302b) die Datenobjekte in der Reihenfolge angibt und der zweite Datensatz (102b, 308b, 410b) Datenelemente (212b) einschließt, von denen sich mindestens eines auf das Datenobjekt unter den Datenobjekten bezieht;
Sortieren (S608) des zweiten Datensatzes (102b, 308b, 410b) durch Gruppieren, aus den zweiten Datenelementen, all der Datenelemente (212b), die einem selben Datenobjekt entsprechen, in eine selbe Gruppe, um eine oder mehrere zweite Gruppen zu erhalten, und Ordnen der einen oder der mehreren zweiten Gruppen gemäß der Reihenfolge der Datenobjekte, die durch die zweite Sortieranweisung (302b) angegeben wird; wobei der zweite sortierte Datensatz (312b) zur Erzeugung eines zweiten verarbeiteten Datensatzes verwendet wird;
wobei der erste sortierte Datensatz und der zweite sortierte Datensatz (312b) synchronisiert übertragen werden, sodass in jedem Verarbeitungszyklus eine erste Verarbeitungsfunktion (314a, 440a) und eine zweite Verarbeitungsfunktion (314b, 440b) die ersten Datenelemente beziehungsweise die zweiten Datenelemente verarbeiten, die sich auf dieselben Datenobjekte beziehen; und
die Verknüpfungsfunktion (318, 450) zu Folgendem konfiguriert ist:
Erhalten des ersten verarbeiteten Datensatzes und des zweiten verarbeiteten Datensatzes;
Verknüpfen (S616) des ersten verarbeiteten Datensatzes und des zweiten verarbeiteten Datensatzes, um einen einzigen verknüpften Datensatz zu erhalten; und
Übertragen (S618) des einzigen verknüpften Datensatzes an einen Datenkonsumenten (216, 322, 460).

12. Kommunikationssystem nach Anspruch 11, wobei die erste Sortieranweisung (302a) dazu konfiguriert ist, Datenobjekte durch Einschließen einer ersten Liste von Kennungen der Datenobjekte in einer Reihenfolge anzugeben, und die zweite Sortieranweisung (302b) dazu konfiguriert ist, Datenobjekte durch Einschließen einer zweiten Liste von Kennungen der Datenobjekte in einer Reihenfolge anzugeben.

13. Kommunikationssystem nach Anspruch 11 oder 12, wobei der erste sortierte Datensatz (312a) alle ersten Datenelemente ausschließt, die sich auf kein Datenobjekt unter den Datenobjekten beziehen, und der zweite sortierte Datensatz (312b) alle zweiten Datenelemente ausschließt, die sich auf kein Datenobjekt unter den Datenobjekten beziehen.

14. Kommunikationssystem nach einem der Ansprüche 11 bis 13, wobei der erste verarbeitete Datensatz eine oder mehrere erste verarbeitete Gruppen einschließt, die erste verarbeitete Gruppe durch Verarbeiten der ersten Gruppe erhalten wird, der zweite verarbeitete Datensatz eine oder mehrere zweite verarbeitete Gruppen einschließt, die zweite verarbeitete Gruppe durch Verarbeiten der zweiten Gruppe erhalten wird, wobei sich jedes verarbeitete Datenelement in der jeweiligen ersten verarbeiteten Gruppe und jedes verarbeitete Datenelement in der jeweiligen zweiten verarbeiteten Gruppe auf dasselbe Datenobjekt bezieht, und der Verknüpfungsschritt Folgendes umfasst:
Verknüpfen der jeweiligen ersten verarbeiteten Gruppe und der jeweiligen zweiten verarbeiteten Gruppe durch Verketten jedes verarbeiteten Datenelements in der ersten verarbeiteten Gruppe mit einem oder mehreren verarbeiteten Datenelementen (214a, 214b) in der zweiten verarbeiteten Gruppe.

15. Kommunikationssystem nach Anspruch 14, wobei der Verknüpfungsschritt auf einer Regel (304) basiert, und die Verknüpfungsfunktion (318, 450) ferner zu Folgendem konfiguriert ist:
Empfangen der Regel (304), wobei die Regel (304) angibt, verarbeitete Gruppen, die sich auf dasselbe Datenobjekt beziehen, zu verknüpfen und angibt, dass sich jedes Datenobjekt auf eine oder mehrere Kennungen bezieht, wobei mindestens eine der einen oder mehreren Kennungen dem ersten verarbeiteten Datensatz entspricht und mindestens die eine andere der einen oder mehreren Kennungen dem zweiten verarbeiteten Datensatz entspricht, wobei die Regel (304) ferner eine Datensatzkennung einschließt, die den ersten verarbeiteten Datensatz angibt.

16. Kommunikationssystem nach Anspruch 15, wobei die Regel (304) ferner eine oder mehrere Angaben einschließt, die eine Zuordnung zwischen der mindestens einen der einen oder mehreren Kennungen und dem ersten verarbeiteten Datensatz und eine Zuordnung zwischen der mindestens anderen der einen oder mehreren Kennungen und dem zweiten verarbeiteten Datensatz angeben, wobei die Regel (304) ferner die andere Datensatzkennung einschließt, die den zweiten verarbeiteten Datensatz angibt.

17. Kommunikationssystem nach Anspruch 15 oder 16, wobei die Regel (304) ferner eine erste Art der Verkettung angibt, wobei der Verknüpfungsschritt basierend auf der Angabe durchgeführt wird, so dass jedes verarbeitete Datenelement in der ersten verarbeiteten Gruppe mit einem verarbeiteten Datenelement in der zweiten verarbeiteten Gruppe verkettet wird.

18. Kommunikationssystem nach einem der Ansprüche 15-17, wobei die Regel (304) ferner eine zweite Art der Verkettung angibt, wobei der Verknüpfungsschritt basierend auf der Angabe durchgeführt wird, so dass jedes verarbeitete Datenelement in der ersten verarbeiteten Gruppe mit mehreren verarbeiteten Datenelementen (214a, 214b) in der zweiten verarbeiteten Gruppe verkettet wird.

19. Kommunikationssystem nach einem der Ansprüche 11-18, wobei die erste Sortieranweisung (302a) von einer Steuerung (324, 420) gesendet wird und Informationen einschließt, die den ersten Datensatz (102a, 308a, 410a) identifizieren, und die zweite Sortieranweisung (302b) von der Steuerung (324, 420) gesendet wird und Informationen einschließt, die den zweiten Datensatz (102b, 308b, 410b) identifizieren; wobei die Informationen, die den ersten Datensatz (102a, 308a, 410a) identifizieren, dieselben sind wie eine Datensatzkennung, die den ersten verarbeiteten Datensatz angibt, und die Informationen, die den zweiten Datensatz (102b, 308b, 410b) identifizieren, dieselben sind wie eine Datensatzkennung, die den zweiten verarbeiteten Datensatz angibt.

20. Kommunikationssystem nach Anspruch 19, wobei die erste Sortieranweisung (302a) ferner Informationen einschließt, die den ersten sortierten Datensatz (312a) identifizieren, und die zweite Sortieranweisung (302b) ferner Informationen einschließt, die den zweiten sortierten Datensatz (312b) identifizieren; wobei die Informationen, die den ersten sortierten Datensatz (312a) identifizieren, dieselben sind wie eine Datensatzkennung, die den ersten verarbeiteten Datensatz angibt, und die Informationen, die den zweiten sortierten Datensatz (312b) identifizieren, dieselben sind wie eine Datensatzkennung, die den zweiten verarbeiteten Datensatz angibt.

## Revendications

1. Procédé mis en œuvre par ordinateur de gestion de données dans un réseau de communication comprenant :
la réception (S602), par une première fonction de tri (310a, 430a), d'une première instruction de tri (302a) pour le tri d'un premier ensemble de données (102a, 308a, 410a) à partir d'une première source, dans lequel la première instruction de tri (302a) indique des objets de données dans un ordre, et le premier ensemble de données (102a, 308a, 410a) comporte de premiers éléments de données dont au moins l'un est lié à un objet de données parmi les objets de données ;
le tri (S604) du premier ensemble de données (102a, 308a, 410a), par la première fonction de tri (310a, 430a), en regroupant, à partir des premiers éléments de données, tous les éléments de données (212a) correspondant à un même objet de données dans un même groupe pour obtenir un ou plusieurs premiers groupes, et en ordonnant les un ou plusieurs premiers groupes selon l'ordre des objets de données indiqué par la première instruction de tri (302a) pour obtenir un premier ensemble de données trié (312a) ;
dans lequel le premier ensemble de données trié (312a) est utilisé pour la génération d'un premier ensemble de données traité ;
la réception (S606), par une seconde fonction de tri (310b, 430b), d'une seconde instruction de tri (302b) pour le tri d'un second ensemble de données (102b, 308b, 410b) à partir d'une seconde source, dans lequel la seconde instruction de tri (302b) indique les objets de données dans l'ordre, et le second ensemble de données (102b, 308b, 410b) comporte des éléments de données (212b) dont au moins l'un est lié à l'objet de données parmi les objets de données ;
le tri (S608) du second ensemble de données (102b, 308b, 410b), par la seconde fonction de tri (310b, 430b), en regroupant, à partir des seconds éléments de données, tous les éléments de données (212b) correspondant à un même objet de données dans un même groupe pour obtenir un ou plusieurs seconds groupes, et en ordonnant les un ou plusieurs seconds groupes selon l'ordre des objets de données indiqué par la seconde instruction de tri (302b) ;
dans lequel le second ensemble de données trié (312b) est utilisé pour la génération d'un second ensemble de données traité ;
dans lequel le premier ensemble de données trié et le second ensemble de données trié (312b) sont transmis de manière synchronisée, de sorte que, dans chaque cycle de traitement, une première fonction de traitement (314a, 440a) et une seconde fonction de traitement (314b, 440b) traitent respectivement les premiers éléments de données et les seconds éléments de données qui sont liés aux mêmes objets de données ;
l'obtention, par une fonction de jonction (318, 450), du premier ensemble de données traité et du second ensemble de données traité ;
la jonction (S616), par la fonction de jonction (318, 450), du premier ensemble de données traité et du second ensemble de données traité pour obtenir un ensemble de données joint unique ; et
la transmission (S618), par la fonction de jonction (318, 450), de l'ensemble de données joint unique à un consommateur de données (216, 322, 460).

2. Procédé selon la revendication 1, dans lequel la première instruction de tri (302a) indique les objets de données dans l'ordre en incluant une première liste d'identifiants des objets de données, et la seconde instruction de tri (302b) indique les objets de données dans l'ordre en incluant une seconde liste d'identifiants des objets de données.

3. Procédé selon la revendication 1 ou 2, dans lequel le premier ensemble de données trié (312a) exclut tout premier élément de données non lié à un objet de données quelconque parmi les objets de données, et le second ensemble de données trié (312b) exclut tout second élément de données non lié à un objet de données quelconque parmi les objets de données.

4. Procédé selon l'une quelconque des revendications 1 à 3, le premier ensemble de données traité comportant un ou plusieurs premiers groupes traités, le premier groupe traité est obtenu par traitement du premier groupe, le second ensemble de données traité comportant un ou plusieurs seconds groupes traités, le second groupe traité est obtenu par traitement du second groupe, dans lequel chaque élément de données traité dans le premier groupe traité particulier et chaque élément de données traité dans le second groupe traité particulier sont liés au même objet de données, et l'étape de jonction comprend :
la jonction du premier groupe traité particulier et du second groupe traité particulier en concaténant chaque élément de données traité dans le premier groupe traité avec un ou plusieurs éléments de données traités (214a, 214b) dans le second groupe traité.

5. Procédé selon la revendication 4, dans lequel l'étape de jonction est basée sur une règle (304), le procédé comprend en outre :
la réception, par la fonction de jonction (318, 450), de la règle (304), dans lequel la règle (304) indique de joindre des groupes traités qui sont liés au même objet de données, et indique que chaque objet de données est lié à un ou plusieurs identifiants, dans lequel au moins l'un des un ou plusieurs identifiants correspond au premier ensemble de données traité et au moins l'autre des un ou plusieurs identifiants correspond au second ensemble de données traité, dans lequel la règle (304) comporte en outre un identifiant d'ensemble de données indiquant le premier ensemble de données traité.

6. Procédé selon la revendication 5, dans lequel la règle (304) comporte en outre une ou plusieurs indications indiquant une correspondance entre l'au moins l'un des un ou plusieurs identifiants et le premier ensemble de données traité et une correspondance entre l'au moins l'autre des un ou plusieurs identifiants et le second ensemble de données traité, dans lequel la règle (304) comporte en outre l'autre identifiant d'ensemble de données indiquant le second ensemble de données traité.

7. Procédé selon la revendication 5 ou 6, dans lequel la règle (304) indique en outre un premier type de concaténation, dans lequel l'étape de jonction est réalisée sur la base de l'indication de sorte que chaque élément de données traité dans le premier groupe traité soit concaténé avec un élément de données traité dans le second groupe traité.

8. Procédé selon l'une quelconque des revendications 1 à 7, dans lequel la règle (304) indique en outre un second type de concaténation, dans lequel l'étape de jonction est réalisée sur la base de l'indication de sorte que chaque élément de données traité dans le premier groupe traité soit concaténé avec de multiples éléments de données traités (214a, 214b) dans le second groupe traité.

9. Procédé selon l'une quelconque des revendications 1 à 8, dans lequel la première instruction de tri (302a) est envoyée à partir d'un dispositif de commande (324, 420) et comporte des informations identifiant le premier ensemble de données (102a, 308a, 410a), et la seconde instruction de tri (302b) est envoyée à partir du dispositif de commande (324, 420) et comporte des informations identifiant le second ensemble de données (102b, 308b, 410b) ; dans lequel les informations identifiant le premier ensemble de données (102a, 308a, 410a) sont les mêmes qu'un identifiant d'ensemble de données indiquant le premier ensemble de données traité, et les informations identifiant le second ensemble de données (102b, 308b, 410b) sont les mêmes qu'un identifiant d'ensemble de données indiquant le second ensemble de données traité.

10. Procédé selon la revendication 9, dans lequel la première instruction de tri (302a) comporte en outre des informations identifiant le premier ensemble de données trié (312a), et la seconde instruction de tri (302b) comporte en outre des informations identifiant le second ensemble de données trié (312b) ;
dans lequel les informations identifiant le premier ensemble de données trié (312a) sont les mêmes qu'un identifiant d'ensemble de données indiquant le premier ensemble de données traité, et les informations identifiant le second ensemble de données trié (312b) sont les mêmes qu'un identifiant d'ensemble de données indiquant le second ensemble de données traité.

11. Système de communication mis en œuvre par ordinateur comprenant une première fonction de tri (310a, 430a), une seconde fonction de tri (310b, 430b) et une fonction de jonction (318, 450), dans lequel :
la première fonction de tri (310a, 430a) est configurée pour :
recevoir (S602) une première instruction de tri (302a) pour le tri d'un premier ensemble de données (102a, 308a, 410a) à partir d'une première source, dans lequel la première instruction de tri (302a) indique des objets de données dans un ordre, et le premier ensemble de données (102a, 308a, 410a) comporte de premiers éléments de données dont au moins l'un est lié à un objet de données parmi les objets de données ;
trier (S604) le premier ensemble de données (102a, 308a, 410a) en regroupant, à partir des premiers éléments de données, tous les éléments de données (212a) correspondant à un même objet de données dans un même groupe pour obtenir un ou plusieurs premiers groupes, et en ordonnant les un ou plusieurs premiers groupes selon l'ordre des objets de données indiqué par la première instruction de tri (302a) pour obtenir un premier ensemble de données trié (312a) ; dans lequel le premier ensemble de données trié (312a) est utilisé pour la génération d'un premier ensemble de données traité ;
la seconde fonction de tri (310b, 430b) est configurée pour :
recevoir (S606) une seconde instruction de tri (302b) pour le tri d'un second ensemble de données (102b, 308b, 410b) à partir d'une seconde source, dans lequel la seconde instruction de tri (302b) indique les objets de données dans l'ordre, et le second ensemble de données (102b, 308b, 410b) comporte des éléments de données (212b) dont au moins l'un est lié à l'objet de données parmi les objets de données ;
trier (S608) le second ensemble de données (102b, 308b, 410b) en regroupant, à partir des seconds éléments de données, tous les éléments de données (212b) correspondant à un même objet de données dans un même groupe pour obtenir un ou plusieurs seconds groupes, et en ordonnant les un ou plusieurs seconds groupes selon l'ordre des objets de données indiqué par la seconde instruction de tri (302b) ; dans lequel le second ensemble de données trié (312b) est utilisé pour la génération d'un second ensemble de données traité ;
dans lequel le premier ensemble de données trié et le second ensemble de données trié (312b) sont transmis de manière synchronisée, de sorte que, dans chaque cycle de traitement, une première fonction de traitement (314a, 440a) et une seconde fonction de traitement (314b, 440b) traitent respectivement les premiers éléments de données et les seconds éléments de données qui sont liés aux mêmes objets de données ; et
la fonction de jonction (318, 450) est configurée pour :
obtenir le premier ensemble de données traité et le second ensemble de données traité ;
joindre (S616) le premier ensemble de données traité et le second ensemble de données traité pour obtenir un ensemble de données joint unique ; et
transmettre (S618) l'ensemble de données joint unique à un consommateur de données (216, 322, 460).

12. Système de communication selon la revendication 11, dans lequel la première instruction de tri (302a) est configurée pour indiquer les objets de données dans l'ordre en incluant une première liste d'identifiants des objets de données, et la seconde instruction de tri (302b) est configurée pour indiquer les objets de données dans l'ordre en incluant une seconde liste d'identifiants des objets de données.

13. Système de communication selon la revendication 11 ou 12, dans lequel le premier ensemble de données trié (312a) exclut tout premier élément de données non lié à un objet de données quelconque parmi les objets de données, et le second ensemble de données trié (312b) exclut tout second élément de données non lié à un objet de données quelconque parmi les objets de données.

14. Système de communication selon l'une quelconque des revendications 11 à 13, dans lequel le premier ensemble de données traité comportant un ou plusieurs premiers groupes traités, le premier groupe traité est obtenu par traitement du premier groupe, le second ensemble de données traité comportant un ou plusieurs seconds groupes traités, le second groupe traité est obtenu par traitement du second groupe, chaque élément de données traité dans le premier groupe traité particulier et chaque élément de données traité dans le second groupe traité particulier sont liés au même objet de données, et l'étape de jonction comprend :
la jonction du premier groupe traité particulier et du second groupe traité particulier en concaténant chaque élément de données traité dans le premier groupe traité avec un ou plusieurs éléments de données traités (214a, 214b) dans le second groupe traité.

15. Système de communication selon la revendication 14, dans lequel l'étape de jonction est basée sur une règle (304), la fonction de jonction (318, 450) est en outre configurée pour : recevoir la règle (304), dans lequel la règle (304) indique de joindre des groupes traités qui sont liés au même objet de données, et indique que chaque objet de données est lié à un ou plusieurs identifiants, dans lequel au moins l'un des un ou plusieurs identifiants correspond au premier ensemble de données traité et au moins l'autre des un ou plusieurs identifiants correspond au second ensemble de données traité, dans lequel la règle (304) comporte en outre un identifiant d'ensemble de données indiquant le premier ensemble de données traité.

16. Système de communication selon la revendication 15, dans lequel la règle (304) comporte en outre une ou plusieurs indications indiquant une correspondance entre l'au moins l'un des un ou plusieurs identifiants et le premier ensemble de données traité et une correspondance entre l'au moins l'autre des un ou plusieurs identifiants et le second ensemble de données traité, dans lequel la règle (304) comporte en outre l'autre identifiant d'ensemble de données indiquant le second ensemble de données traité.

17. Système de communication selon la revendication 15 ou 16, dans lequel la règle (304) indique en outre un premier type de concaténation, dans lequel l'étape de jonction est réalisée sur la base de l'indication de sorte que chaque élément de données traité dans le premier groupe traité soit concaténé avec un élément de données traité dans le second groupe traité.

18. Système de communication selon l'une quelconque des revendications 15 à 17, dans lequel la règle (304) indique en outre un second type de concaténation, dans lequel l'étape de jonction est réalisée sur la base de l'indication de sorte que chaque élément de données traité dans le premier groupe traité soit concaténé avec de multiples éléments de données traités (214a, 214b) dans le second groupe traité.

19. Système de communication selon l'une quelconque des revendications 11 à 18, dans lequel la première instruction de tri (302a) est envoyée à partir d'un dispositif de commande (324, 420) et comporte des informations identifiant le premier ensemble de données (102a, 308a, 410a), et la seconde instruction de tri (302b) est envoyée à partir du dispositif de commande (324, 420) et comporte des informations identifiant le second ensemble de données (102b, 308b, 410b) ; dans lequel les informations identifiant le premier ensemble de données (102a, 308a, 410a) sont les mêmes qu'un identifiant d'ensemble de données indiquant le premier ensemble de données traité, et les informations identifiant le second ensemble de données (102b, 308b, 410b) sont les mêmes qu'un identifiant d'ensemble de données indiquant le second ensemble de données traité.

20. Système de communication selon la revendication 19, dans lequel la première instruction de tri (302a) comporte en outre des informations identifiant le premier ensemble de données trié (312a), et la seconde instruction de tri (302b) comporte en outre des informations identifiant le second ensemble de données trié (312b) ; dans lequel les informations identifiant le premier ensemble de données trié (312a) sont les mêmes qu'un identifiant d'ensemble de données indiquant le premier ensemble de données traité, et les informations identifiant le second ensemble de données trié (312b) sont les mêmes qu'un identifiant d'ensemble de données indiquant le second ensemble de données traité.
